# EUROPÄISCHE PATENTSCHRIFT

(11) **EP 1 223 001 B1**
(45) Veröffentlichungstag und Bekanntmachung des Hinweises auf die Patenterteilung: **13.10.2004**
(21) Anmeldenummer: 01129815.5
(22) Anmeldetag: 14.12.2001
(51) Int. Cl.: B23Q 3/18, B23Q 1/00, B23Q 3/00, B23Q 3/06, B23Q 3/14

(54) **Vorrichtung zur positionsdefinierten Aufnahme eines Werkstücks, insbesondere eines Karosserieteils**
Device for the precise positioning of a workpiece, in particular of a vehicle body part
Dispositif de positionnement d'une pièce dans une position définie, en particulier d'une pièce de carrosserie

(30) Priorität: 12.01.2001 DE 10101179
(43) Veröffentlichungstag der Anmeldung: 17.07.2002
(73) Patentinhaber: AUDI AG, 85045 Ingolstadt (DE)
(72) Erfinder: Arbesmeier, Bernhard, 93336 Hagenhill (DE)
(74) Vertreter: Geissler, Manfred

(56) Entgegenhaltungen:
- EP-A- 0 555 810
- DE-A- 1 777 005
- DE-A- 1 777 007
- DE-C- 3 729 601
- DE-C- 3 919 077
- US-A- 4 390 172
- US-A- 4 598 453

## Beschreibung

Die Erfindung betrifft eine Vorrichtung zur positionsdefinierten Aufnahme eines Werkstücks, insbesondere eines Karosserieteils.

Eine solche Vorrichtung dient dazu, eine definierte Relativlage eines Werkstücks bezüglich einer Bearbeitungsvorrichtung und/oder eines anderen Bauteils sicherzustellen, um präzise Weiterbearbeitungen vornehmen zu können. Bei einer allgemein bekannten Vorrichtung dieser Art sind über Bolzenträger verbundene Bolzen als Positionierelemente mit der Vorrichtung verbunden. Diese Bolzen weisen eine zylindrische Form auf und die Mantelflächen der Zylinder sind als Anlageflächen vorgesehen. Den Bolzen sind Aufnahmebohrungen im Werkstück zugeordnet, wobei die radialen Innenränder oder Innenflächen dieser Bohrungen Abstützflächen für die Mantelflächen eingesteckter Bolzen sind. Es sind auch Aufnahmelöcher in der Form von Langlöchem und Kragenlöchern bekannt.

Der Maßunterschied zwischen einem Aufnahmeloch und einem eingesetzten Bolzen von etwa 0,1 bis 0,2 mm kommt insbesondere beim Fügen von Karosserieteilen zu den nicht vermeidbaren Einzeltoleranzen hinzu und führt zu einer nicht beeinflußbaren Ungenauigkeit und Streuung.

Außerdem werden Aufnahmelöcher oft beschädigt, da die Bolzen nur an einer Stelle anliegen und die Fügerichtung regelmäßig quer zur Fixierrichtung läuft wobei auch an sich bekannte ziehbare Bolzen dies nicht komplett verhindern können.

Weiter ist eine Positioniervorrichtung für zwei zu fügende Bauteile bekannt (DE 42 03 853 A1) mit Positionierelementen, die in fluchtenden Bohrungen der beiden Bauteile einsetzbar sind und deren Ausrichtflächen in radialer Richtung zur Symmetrieachse gegen Federkraft verschiebbar ausgebildet sind. Damit können Toleranzen zwischen den beiden Bauteilen ausgeglichen werden, wobei durch die Verschiebbarkeit der Ausrichtflächen jedoch die Präzision der Positionierung beeinträchtigt ist.

In einer weiter bekannten Vorrichtung zum Aufspannen eines Werkstücks oder Werkzeugs (DE 37 29 601 C1) sind an einem Bauteil konische Zentrierzapfen vorgesehen, denen am anderen Bauteil Zentrieröffnungen zugeordnet sind. Um eine Überbestimmung der Position bei vorliegenden Toleranzen zu vermeiden, sind die Zentrierzapfen ortsfest angebracht wogegen lediglich eine Zentrieröffnung ortsfest und andere Zentrieröffnungen zum Toleranzausgleich verschiebbar ausgeführt sind. Eine spielfreie Aufnahme mit genauer Positionierung ist hier nur an der Stelle mit der ortsfest angebrachten Zentrieröffnung möglich, während Toleranzen von hier aus in Richtung der anderen verschiebbaren Zentrieröffnungen verteilt werden.

Zudem ist eine Vorrichtung zum positionsdefinierten Aufspannen eines Werkstücks auf einem Bearbeitungstisch bekannt (DE 39 19 077 C1), bei der jeweils an einer Zentrierstelle Zentrierorgane auf ein gemeinsames Zentrum hin gesteuert verschiebbar sind. In diesem Zentrum kann ein eingesetzter Zentrierzapfen des Werkstücks eingespannt und spielfrei gehalten werden. Eine solche Anordnung ist sehr aufwendig.

Weiter ist eine Anordnung bekannt, bei der zwei Bauteile mit genauer Relativposition übereinander gelegt werden können (US 4 390 172). Dazu sind an einem horizontal ausgerichteten Plattenteil eines unteren Bauteils in einer Dreiecksanordnung zwei Positionierkugeln und ein Positionierkegel angebracht. In einem zugeordneten Plattenteil eines auflegbaren oberen Bauteils sind zur Aufnahme einer Kugel eine pyramidenförmige Ausnehmung und zur Aufnahme der zweiten Kugel eine dachförmige Ausnehmung vorgesehen. Die Kegelspitze liegt an einer Fläche ohne Ausnehmung an. Die Relativposition wird an der Stelle der in die pyramidenförmige Ausnehmung einliegenden Positionierkugel exakt eingehalten. Toleranzen und ggf. vorhandene unterschiedliche Temperaturausdehnungen der Bauteile werden durch Verschiebungen in den anderen beiden Anlagestellen aufgenommen. Eine solche einfache Positionierung durch ein Übereinanderlegen von Bauteilen ist bei Krafteinwirkungen auf die Bauteile, insbesondere bei Fügebearbeitungen an Karosseriebauteilen nicht geeignet.

Die Grundlage für den Oberbegriff des Anspruchs 1 bildet eine bekannte Vorrichtung zur positionsdefinierten Aufnahme eines Werkstücks (DE-A-1777005) mit wenigstens einem mit der Vorrichtung über einen Bolzenträger verbundenen Bolzen und mit einem dem wenigstens einen Bolzen zugeordneten Aufnahmeloch im Werkstück zur Aufnahme des Bolzens bei einer Halterung des Werkstücks in der Vorrichtung. Der Bolzenträger ist eine Dreheinheit, mit der der Bolzen um seine Bolzenachse als Drehachse zwischen einer Einführposition und einer Halteposition gesteuert verdrehbar ist. Sowohl der Bolzen als auch das zugeordnete Aufnahmeloch weisen einen nicht kreisförmigen Querschnitt auf dergestalt, dass ein die größte Querschnittsausdehnung des Bolzens umschreibender Kreis in seinem Kreisdurchmesser größer ist als ein Querschnittdurchmesser des Aufnahmelochs, so dass damit der in die Einführposition gedrehte Bolzen in das zugeordnete Aufnahmeloch bei vorgegebener Werkstückausrichtung einführbar ist. Der nach dem Einführen in die Halteposition verdrehbare und dadurch verriegelbare Bolzen ist mit wenigstens einem Anlagebereich seiner Mantelfläche am Innenrad des Aufnahmelochs für eine Positionsjustierung und Halterung des Werkstücks zur Anlage bringbar. Der Bolzen ebenso wie das Aufnahmeloch weisen eine langgestreckte Querschnittsform auf und das Aufnahmeloch ist als Langloch mit gegenüberliegenden parallelen geraden Innenrandbereichen ausgeführt. Dabei ist die Querschnittsform des Bolzens etwa ovalförmig mit gegenüberliegenden etwa geraden Anlagebereichen ausgeführt, die in der Halteposition an den etwa geraden Innenrandbereichen anliegen. Alternativ weist der Bolzen ebenso wie das Aufnahmeloch eine Querschnittsform in der Art etwa einer Dreiecksform auf, wobei die Dreiecks-Querschnittsform des Bolzens gekappte Dreiecksspitzenbereiche mit Eindrehschrägen aufweisen, die die Anlagebereiche des Bolzens an Dreiecksseiten der Innenrandbereiche des Aufnahmelochs mit der Halteposition bilden und wobei die Dreiecksform gleichseitig mit gerundeten Übergängen für die Dreiecksseiten ausgebildet ist.

Aufgabe der Erfindung ist es die vorstehende Vorrichtung so weiterzubilden, dass Werkstücke, insbesondere kompliziert und unregelmäßig geformte Werkstücke, nachdem sie in die Vorrichtung eingesetzt worden sind durch Bolzen fixiert und justiert werden können.

Diese Aufgabe wird dadurch gelöst, dass die Dreheinheit zusätzlich eine Hubbetätigung in Achsrichtung und ist somit als Hub-Dreheinheit ausgebildet. Der Hubantrieb kann elektrisch, pneumatisch oder hydraulisch ggf. in Verbindung mit dem Drehantrieb ausgeführt sein. Die Hub-Dreheinheit funktioniert dergestalt, dass in der Winkelstellung der Einführposition der Bolzen aus einer gegenüber dem Werkstück zurückgezogenen Grundstellung in das Aufnahmeloch eines aufgesetzten Werkstücks ausfahrbar und in die Halte- und Verriegelungsposition verdrehbar ist. Damit können auch kompliziert und unregelmäßig geformte Werkstücke bei zurückgezogenen Bolzen in die Vorrichtung eingesetzt werden und anschließend durch Ausfahren der Bolzen fixiert und justiert werden.

Mit den Ansprüchen 2 und 3 werden geeignete Verdrehwinkel angegeben.

Zur Erleichterung der Einführung der Bolzen in die Aufnahmelöcher wird mit Anspruch 4 beansprucht, die Bolzen durch Einführschrägen an ihren freien Bolzenenden konisch auszubilden.

Nach Anspruch 5 ist die erfindungsgemäße Vorrichtung besonders vorteilhaft im Karosseriebau einsetzbar, wobei unter dem Begriff Werkstück ein oder mehrere zueinander positionierbare Karosseriebauteile zu verstehen sind. Die Vorrichtung ist jedoch auch vorteilhaft anstelle solcher Positionierungen von Blechteilen auch für eine spielfreie Fixierung von Vorrichtungen zu Grundrahmen für Spannrahmen in einer Aufbaustation, für Druck- und Stranggussteile bei Aluminiumanwendungen und als spielfreies selbsthemmendes Montageelement für Montageteile einsetzbar.

Anhand einer Zeichnung wird die Erfindung näher erläutert.

Es zeigen:
- Fig. 1: eine schematische Schnittansicht einer Vorrichtung zur positionsdefinierten Aufnahme eines Karosserieteils mit einer Hub-Dreheinheit,
- Fig. 2: eine erste und zweite Aufnahmelochkontur mit jeweils zugeordneten Bolzen in einer Einführposition,
- Fig. 3: eine Darstellung entsprechend Fig. 2 mit jeweils verriegelten Bolzen in der ersten und zweiten Ausführungsform,
- Fig. 4: eine schematische Darstellung der Aufnahmeloch- und Bolzengeometrie der ersten Ausführungsform, und
- Fig. 5: eine schematische Darstellung der Aufnahmeloch- und Bolzengeometrie der zweiten Ausführungsform

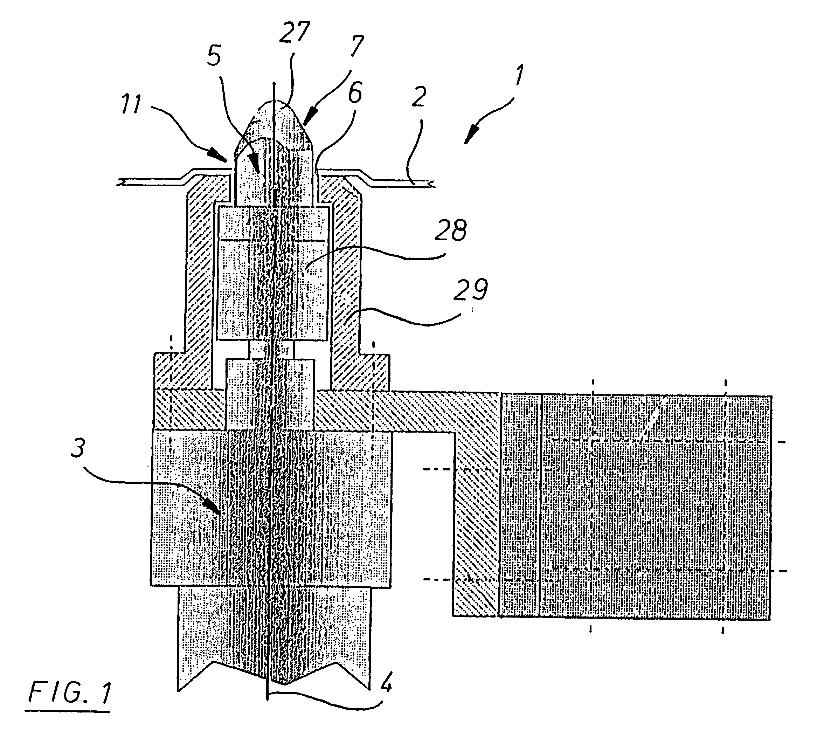

In der Fig. 1 ist schematisch eine Vorrichtung 1 zur positionsdefinierten Aufnahme eines Karosserieteils 2 dargestellt, das eine Hub-Dreheinheit 3 mit einer Dreheinheit um die Längsachse 4 sowie eine Hubbetätigung in Richtung dieser Längsachse 4 umfaßt, was hier lediglich äußerst schematisch dargestellt ist.

Ein Bolzen 5 der Vorrichtung 1 kann mittels der Hubbetätigung der Hub-Dreheinheit 3 aus einer in der Fig. 1 nicht dargestellten gegenüber dem Karosserieteil 2 zurückgezogenen Grundstellung in ein entsprechend zugeordnetes und im Karosserieteil 2 ausgebildetes Aufnahmeloch 6 für den Bolzen 5 ausgefahren werden, wie dies in der Fig. 1 dargestellt ist.

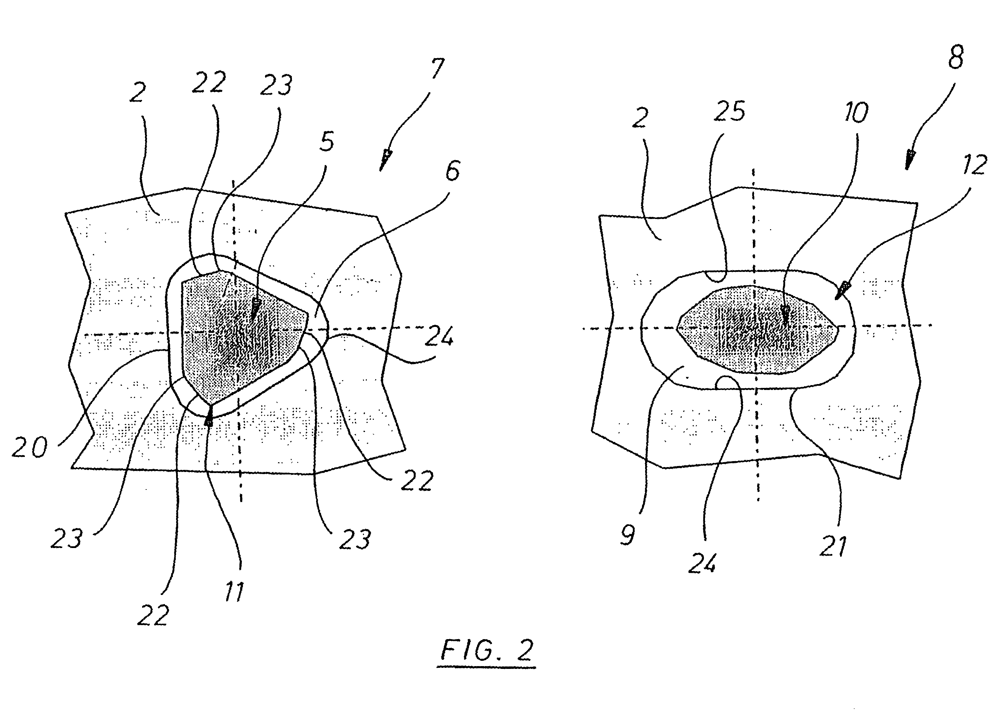

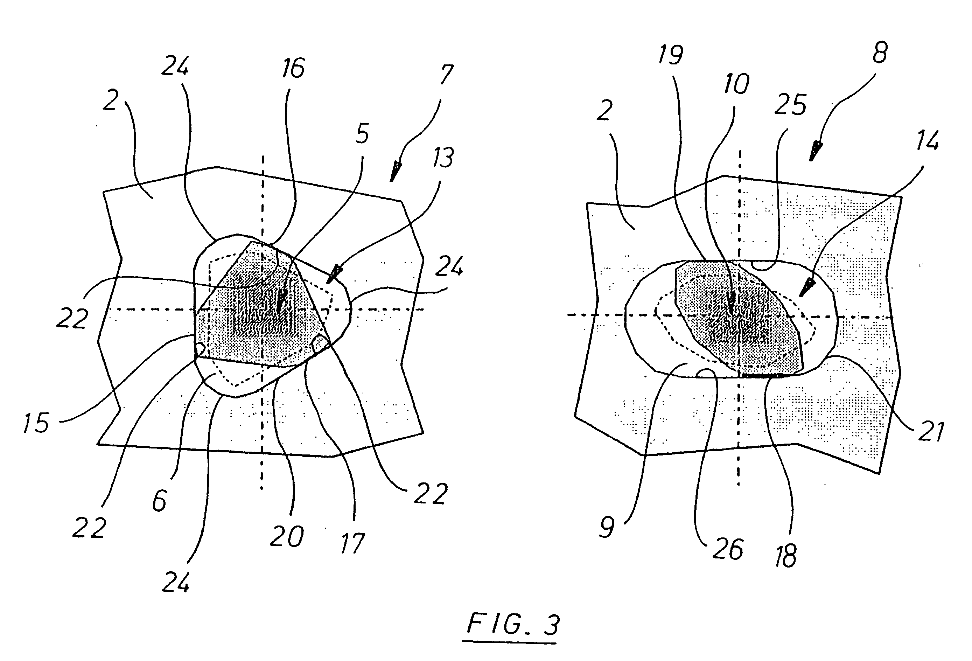

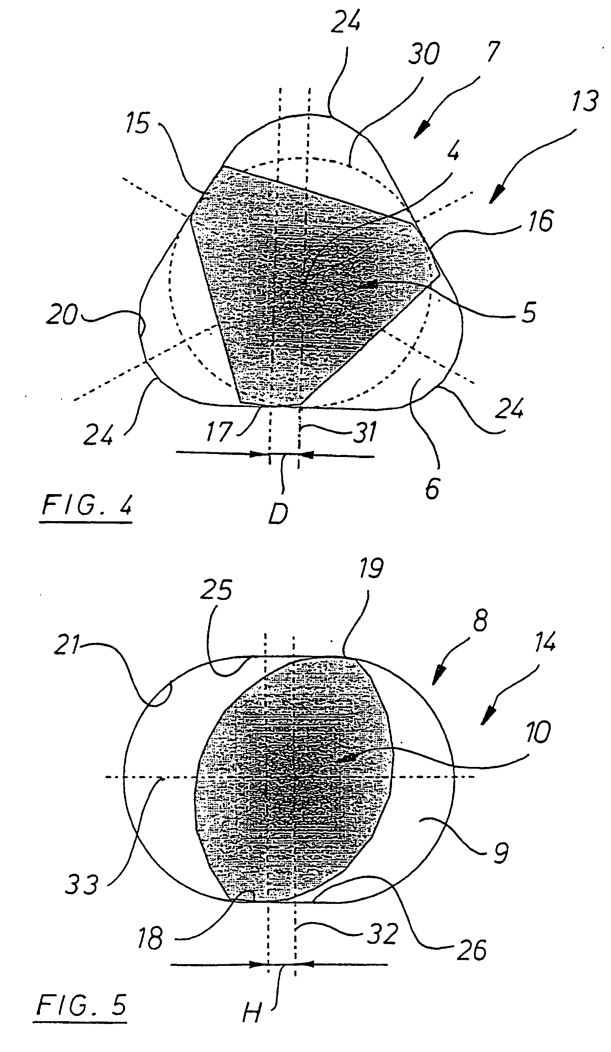

Wie dies insbesondere aus der Fig. 2 ersichtlich ist, die eine Aufnahmelochkontur des Aufnahmelochs 6 der Fig. 1 mit entsprechend zugeordnetem Bolzen als erste Ausführungsform und eine Aufnahmelochkontur eines alternativen Aufnahmelochs 9 mit entsprechend zugeordnetem Bolzen 10 als zweite Ausführungsform 8 zeigt, weisen die Bolzen 5, 10 sowie auch das diesen entsprechend zugeordnete Aufnahmeloch 6 bzw. 9 jeweils einen nicht kreisförmigen Querschnitt auf. Wie dies insbesondere auch aus den Fig. 4 und 5 ersichtlich ist, die jeweils in vergrößerter Darstellung die Geometrie der ersten Ausführungsform 7 (Fig. 4) und der zweiten Ausführungsform 8 (Fig. 5) zeigen, ist ein die größte Querschnittsausdehnung des Bolzens umschreibender Kreis in seinem Kreisdurchmesser größer als ein Querschnittdurchmesser des Aufnahmelochs 6, 7. Dadurch wird erreicht, dass die Bolzen 5, 10 aus ihrer in der Fig. 2 dargestellten Einführposition 11, 12 heraus mittels der Hub-Dreheinheit 3 in die in der Fig. 3 dargestellten Halteposition 13, 14 verdreht werden können, in der die Bolzen 5, 10 mit Anlagebereichen 15, 16, 17 der Mantelfläche des Bolzens 5 und mit Anlagebereichen 18, 19 der Mantelfläche des Bolzens 10 am Innenrand 20, 21 der entsprechend zugeordneten Aufnahmelöcher 6, 9 für eine Positionsjustierung und Halterung des Karosserieteils 2 zur Anlage gebracht sind, um die Bolzen 5, 10 in dem entsprechend zugeordneten Aufnahmeloch 6 bzw. 9 zu verriegeln.

Grundsätzlich gibt es verschiedene Möglichkeiten, die Lochkontur und damit entsprechend auch die Bolzenkontur in der erfindungsgemäßen Art und Weise auszubilden. In den Figuren sind lediglich zwei Ausführungsformen gezeigt, wobei die erste Ausführungsform 7 eine Fixierung in X- und Y-Richtung erlaubt, während die zweite Ausführungsform 8 lediglich eine Fixierung in Y-Richtung ermöglicht.

Wie dies wiederum aus der Fig. 1 ersichtlich ist, kann der Bolzen 5 an seinem freien Bolzenende durch Einführschrägen 27 zudem konisch ausgebildet sein. Die Vorrichtung 1 zeigt hier zudem noch einen Adapter 28, um den herum bei Bedarf eine Auflage 29 als sog. Z-Richtungsauflage angeordnet werden kann.

Nachfolgend werden die Geometrien der ersten Ausführungsform 7 und der zweiten Ausführungsform 8 anhand der Fig. 2 bis 4 näher erläutert:

Gemäß der ersten Ausführungsform 7 weist der Bolzen 5 ebenso wie das Aufnahmeloch 6 eine in etwa dreieckige Querschnittsform auf, wobei die Dreiecks-Querschnittsform des Bolzens 5 durch gekappte Dreiecksspitzenbereiche 22 mit Einlaufschrägen 23 ausgebildet ist, die die Anlagebereiche 15, 16 und 17 des Bolzens 5 an den Dreiecksseiten des Innenrands 20 des Aufnahmelochs 6 in der Halteposition 13 bilden.

Die Dreiecksform des Aufnahmelochs 6 ist dabei gleichseitig mit gerundeten Übergängen 24 ausgebildet, wobei, wie ein Vergleich der Einführposition 11 mit der Halteposition 13 der Fig. 2 und 3 zeigt, der Verdrehwinkel zwischen dieser Einführposition 11 und der Halteposition 13 in einer Größenordnung von in etwa 30° bis 60° liegt.

Der Bolzen 10 weist dagegen ebenso wie das diesem zugeordnete Aufnahmeloch 9 eine in etwa langgestreckte Querschnittsform auf, wobei das Aufnahmeloch 9 als Langloch mit gegenüberliegenden parallelen geraden Innenrandbereichen 25, 26 ausgeführt ist. Die Querschnittsform des Bolzens 10 ist in etwa oval mit gegenüberliegenden in etwa geraden Anlagebereichen 18, 19, die in der Halteposition 14 an den geraden Innenrandbereichen 25, 26 anliegen.

Wie ein Vergleich der Fig. 2 und 3 bezüglich der zweiten Ausführungsform 8 zeigt, liegt der Verdrehwinkel zwischen der Einführposition 12 und der Halteposition 14 in etwa in einer Größenordnung zwischen 45° und 90°.

Die Geometrie der Aufnahmelöcher 6, 9 und der zugeordneten Bolzen 5, 10 ist durch Maße sehr gut beschreibbar. So ist z. B. in das als gleichseitiges Dreieck ausgebildete Aufnahmeloch 6 ein mit 30 bezeichneter Nenndurchmesser einbeschreibbar, wobei der Radius der gerundeten Übergänge 24 in etwa 0,6-mal dem Nenndurchmesser 30 entspricht. Zudem entspricht der Abstand D zwischen dem mittleren Anpressbereich der Anlagebereiche 15, 16, 17, wie dies in der Fig. 4 lediglich für den Anlagebereich 15 schematisch dargestellt ist, und der Mittelsenkrechten auf die Dreiecksseite des Aufnahmelochs 6 in etwa 0,12-mal dem Nenndurchmesser 30, wobei diese Mittelsenkrechte jeweils durch die Mitte eines der gerundeten Übergänge 24 und der gegenüberliegenden Dreiecksseite geführt ist, so dass der Schnittpunkt der drei Mittelsenkrechten den Drehpunkt des Bolzens 5 und damit die Längsachse 4 festlegen.

Ähnlich verhält es sich mit dem Bolzen 10 und dem Aufnahmeloch 9 der zweiten Ausführungsform 8, bei der die Mittelachsen 32, 33 bezüglich des Aufnahmelochs 9 die Drehachse des Bolzens 10 durch ihren Schnittpunkt definieren. Der Abstand H zwischen der Mittelachse 32 und dem Beginn des Anlagebereichs 18 beträgt hier ebenfalls z. B. wieder 0,12-mal dem Nenndurchmesser, wobei der Nenndurchmesser ebenfalls wiederum ein dem Aufnahmeloch 9 einbeschriebener Kreis ist, was hier jedoch nicht gezeigt ist.

## Patentansprüche

1. Vorrichtung zur positionsdefinierten Aufnahme eines Werkstücks, insbesondere eines Karosserieteils
mit wenigstens einem mit der Vorrichtung über einen Bolzenträger verbundenen Bolzen (5, 10) und
mit einem dem wenigstens einen Bolzen (5, 10) zugeordneten Aufnahmeloch (6, 9) im Werkstück zur Aufnahme des Bolzens (5, 10) bei einer Halterung des Werkstücks in der Vorrichtung, wobei
der Bolzenträger eine Dreheinheit ist, mit der der Bolzen (5, 10) um seine Bolzenachse (4) als Drehachse zwischen einer Einführposition (11, 12) und einer Halteposition (13, 14) gesteuert verdrehbar ist, und
sowohl der Bolzen (5, 10) als auch das zugeordnete Aufnahmeloch (6, 9) einen nicht kreisförmigen Querschnitt aufweisen, dergestalt, dass ein die größte Querschnittsausdehnung des Bolzens (5, 10) umschreibender Kreis in seinem Kreisdurchmesser größer ist als ein Querschnittdurchmesser des Aufnahmelochs (6, 9), so dass damit der in die Einführposition (11, 12) gedrehte Bolzen (5, 10) in das zugeordnete Aufnahmeloch (6, 9) bei vorgegebener Werkstückausrichtung einführbar ist und der nach dem Einführen in die Halteposition (13, 14) verdrehbare und dadurch verriegelbare Bolzen (5, 10) mit wenigstens einem Anlagebereich (15, 16, 17) seiner Mantelfläche am Innenrand (20, 21) des Aufnahmelochs (6, 9) für eine Positionsjustierung und Halterung des Werkstücks (2) zur Anlage bringbar ist,
der Bolzen (10) ebenso wie das Aufnahmeloch (9) eine langgestreckte Querschnittsform aufweisen,
das Aufnahmeloch (9) als Langloch mit gegenüberliegenden parallelen geraden Innenrandbereichen (25, 26) ausgeführt ist, und
wobei die Querschnittsform des Bolzens (10) etwa ovalförmig mit gegenüberliegenden etwa geraden Anlagebereichen (18, 19) ausgeführt ist, die in der Halteposition (14) an den etwa geraden Innenrandbereichen (25, 26) anliegen oder
wobei der Bolzen (5) ebenso wie das Aufnahmeloch (6) eine Querschnittsform in der Art etwa einer Dreiecksform aufweisen, wobei die Dreiecks-Querschnittsform des Bolzens (5) gekappte Dreiecksspitzenbereiche (22) mit Eindrehschrägen (23) aufweisen, die die Anlagebereiche des Bolzens (10) an Dreiecksseiten der Innenrandbereiche des Aufnahmelochs (6) in der Halteposition (14) bilden und die Dreiecksform gleichseitig mit gerundeten Übergängen (24) für die Dreiecksseiten ausgebildet ist,
**dadurch gekennzeichnet,**
**dass** die Dreheinheit zusätzlich eine Hubbetätigung in Achsrichtung umfasst und somit als Hub-Dreheinheit (3) ausgebildet ist, dergestalt,
**dass** in der Winkelstellung der Einführposition (11, 12) der Bolzen (5, 10) aus einer gegenüber dem Werkstück zurückgezogenen Grundstellung in das Aufnahmeloch (6, 9) ausfahrbar und in die Halteposition (13, 14) verdrehbar ist.

2. Vorrichtung zur positionsdefinierten Aufnahme eines Werkstücks, insbesondere eines Karosserieteils nach Anspruch 1, **dadurch gekennzeichnet, dass** bei einem Bolzen (10) mit ovaler Querschnittsform der Verdrehwinkel zwischen der Einführposition (12) und der Halteposition (14) für eine Selbsthemmung in einer Größe von 45° bis 90° liegt.

3. Vorrichtung zur positionsdefinierten Aufnahme eines Werkstücks, insbesondere eines Karosserieteils nach Anspruch 1, **dadurch gekennzeichnet, dass** bei einem Bolzen (5) mit einer Querschnittsform als Dreiecksform der Verdrehwinkel zwischen der Einführposition (11) und der Halteposition (13) in einer Größe von 30° bis 60° liegt.

4. Vorrichtung zur positionsdefinierten Aufnahme eines Werkstücks, insbesondere eines Karosserieteils nach einem der Ansprüche 1 bis Anspruch 3, **dadurch gekennzeichnet, dass** der Bolzen (10) an seinem freien Bolzenende durch Einführschrägen (27) konisch ausgebildet ist.

5. Vorrichtung zur positionsdefinierten Aufnahme eines Werkstücks, insbesondere eines Karosserieteils nach einem der Ansprüche 1 bis Anspruch 4, **dadurch gekennzeichnet, dass** das Werkstück ein oder mehrere zueinander positionierbare Karosseriebauteile (2) sind.

## Claims

1. Device for the positionally defined retention of a workpiece, in particular a vehicle body part, comprising at least one pin (5, 10) connected to the device via a pin carrier, and a receiving aperture (6, 9) in the workpiece associated with the at least one pin (5, 10) for receiving the pin (5, 10) when the workpiece is held in the device, the pin carrier being a rotating unit with which the pin (5, 10) is rotatable in a controlled manner about its pin axis (4) as the axis of rotation between an insertion position (11, 12) and a retaining position (13, 14), and both the pin (5, 10) and the associated receiving aperture (6, 9) having a non-circular cross-section, such that a circle circumscribing the largest cross-sectional extension of the pin (5, 10) has a larger diameter than a cross-sectional diameter of the receiving aperture (6, 9), so that the pin (5, 10), when rotated to the insertion position (11, 12), is insertable into the associated receiving aperture (6, 9) when the workpiece has a predetermined orientation, and at least one abutment zone (15, 16, 17) of the lateral surface of the pin (5, 10), which pin (5, 10) after insertion is rotatable to the retaining position (13, 14) and thereby lockable, can be moved into abutment against the inner edge (20, 21) of the receiving aperture (6, 9) for positional adjustment and retention of the workpiece (2), the pin (10), like the receiving aperture (9), having an elongated cross-sectional shape, the receiving aperture (9) being configured as an elongated hole with parallel, straight opposed internal edge zones (25, 26) and the cross-sectional shape of the pin (10) being approximately oval with approximately straight opposed abutment zones (18, 19) which in the retaining position (14) abut against the approximately straight internal edge zones (25, 26), or the pin (5), like the receiving aperture (6), having a cross-sectional shape with an approximately triangular configuration, the triangular cross-sectional shape of the pin (5) having truncated tip zones (22) with twist-in bevels (23) which form the abutment zones of the pin (10) against sides of the triangle formed by the internal edge zones of the receiving aperture (6) in the retaining position (14) and the triangular shape being at the same time configured with rounded transitions (24) for the sides of the triangle, **characterised in that** the rotating unit additionally includes a lifting actuation in the axial direction and therefore is configured as a lifting/rotating unit (3) such that, in the angular position of the insertion position (11, 12), the pin (5, 10) can be extended with respect to the workpiece from a retracted base position in the receiving aperture (6, 9) and rotated to the retaining position (13, 14).

2. Device for the positionally defined retention of a workpiece, in particular a vehicle body part according to claim 1, **characterised in that**, in the case of a pin (10) having an oval cross-sectional shape, the angle of rotation between the insertion position (12), and the retaining position (14) for self-locking is within a magnitude from 45° to 90°.

3. Device for the positionally defined retention of a workpiece, in particular a vehicle body part according to claim 1, **characterised in that**, in the case of a pin (5) having a triangular cross-sectional shape, the angle of rotation between the insertion position (11), and the retaining position (13) is within a magnitude from 30 ° to 60°.

4. Device for the positionally defined retention of a workpiece, in particular a vehicle body part according any one of claims 1 to 3, **characterised in that** the pin (10) has at its free end a conical configuration formed by insertion bevels (27).

5. Device for the positionally defined retention of a workpiece, in particular a vehicle body part according to any one of claims 1 to 4, **characterised in that** the workpiece is one or more vehicle body components (2) which are positionable with respect to one another.

## Revendications

1. Dispositif destiné à la réception en position définie d'une pièce, notamment d'un élément de carrosserie,
comportant au moins un tourillon (5, 10) relié au dispositif par l'intermédiaire d'un support de tourillon, et
associé à l'au moins un tourillon (5, 10), un trou de réception (6, 9) pratiqué dans la pièce pour la réception du tourillon (5, 10) lorsque la pièce est retenue dans le dispositif,
le support de tourillon étant une unité de rotation, avec laquelle le tourillon (5, 10) peut être tourné de façon commandée autour de son axe (4) de tourillon en tant qu'axe de rotation entre une position d'insertion (11, 12) et une position de retenue (13, 14), et
aussi bien le tourillon (5, 10) que le trou de réception (6, 9) associé ayant une section transversale non circulaire, de telle sorte que le diamètre d'un cercle décrivant l'extension en section transversale maximale du tourillon (5, 10) soit plus important qu'un diamètre en section transversale du trou de réception (6, 9), ce qui fait que, dans une orientation prédéterminée de la pièce, le tourillon (5, 10) tourné dans la position d'insertion (11, 12) peut être inséré dans le trou de réception (6, 9) associé, et que, après l'insertion dans la position de retenue (13, 14), le tourillon (5, 10) pouvant être tourné et par conséquent verrouillé, peut être mis en appui contre le bord intérieur (20, 21) du trou de réception (6, 9) par au moins une zone d'appui (15, 16, 17) de sa surface d'enveloppe pour un ajustement en position et une retenue de la pièce (2),
le tourillon (10), de même que le trou de réception (9), ayant une forme oblongue en section transversale,
le trou de réception (9) étant réalisé en tant que trou oblong avec des zones de bord intérieur (25, 26) opposées droites et parallèles, et
la forme en section transversale du tourillon (10) étant approximativement ovale avec des zones d'appui (18, 19) opposées approximativement droites qui, dans la position de retenue (14), prennent appui sur les zones de bord intérieur (25, 26) approximativement droites, ou
le tourillon (5), de même que le trou de réception (6), ayant en section transversale la forme approximative d'un triangle, la forme triangulaire en section transversale du tourillon (5) comportant des zones de pointes de triangle (22) écrêtées avec des chanfreins d'insertion (23), qui constituent en position de retenue (14) les zones d'appui du tourillon (10) au niveau de côtés triangulaires des zones de bord intérieur du trou de réception (6), et la forme triangulaire étant équilatérale avec des transitions arrondies (24) pour les côtés triangulaires,
**caractérisé en ce que**
l'unité de rotation comporte en outre un actionnement de relevage (3) dans la direction axiale, et est de ce fait agencée sous la forme d'une unité de relevage / rotation de telle sorte que, dans la position angulaire de la position d'insertion (11, 12), le tourillon (5, 10) puisse être déplacé d'une position de base, dans laquelle il est en retrait par rapport à la pièce, dans le trou de réception (6, 9) et tourné dans la position de retenue (13, 14).

2. Dispositif destiné à la réception en position définie d'une pièce, notamment d'un élément de carrosserie, selon la revendication 1, **caractérisé en ce que**, pour un tourillon (10) avec une forme ovale en section transversale, l'angle de rotation entre la position d'insertion (12) et la position de retenue (14) se situe pour un autoblocage dans un ordre de grandeur de 45° à 90°.

3. Dispositif destiné à la réception en position définie d'une pièce, notamment d'un élément de carrosserie, selon la revendication 1, **caractérisé en ce que**, pour un tourillon (5) avec une forme triangulaire en section transversale, l'angle de rotation entre la position d'insertion (11) et la position de retenue (13) se situe dans un ordre de grandeur de 30° à 60°.

4. Dispositif destiné à la réception en position définie d'une pièce, notamment d'un élément de carrosserie, selon l'une des revendications 1 à 3, **caractérisé en ce que** le tourillon (10) est agencé de façon conique au niveau de son extrémité libre par des chanfreins d'insertion (27).

5. Dispositif destiné à la réception en position définie d'une pièce, notamment d'un élément de carrosserie, selon l'une des revendications 1 à 4, **caractérisé en ce que** la pièce est un ou plusieurs éléments de carrosserie (2) pouvant être positionnés les uns par rapport aux autres.
